# EUROPÄISCHE PATENTANMELDUNG

(11) **EP 4 455 621 A1**
(43) Veröffentlichungstag der Anmeldung: **30.10.2024**
(21) Anmeldenummer: 24171484.9
(22) Anmeldetag: 22.04.2024
(51) Int. Cl.: G01F 1/36, G01F 15/14

(54) **STRÖMUNGSWIDERSTANDSROHR FÜR EINEN DURCHFLUSSSENSOR, DURCHFLUSSSENSOR UND VERFAHREN ZUR HERSTELLUNG EINES STRÖMUNGSWIDERSTANDSROHRS**

(30) Priorität: 28.04.2023 DE 102023111049
(71) Anmelder: Drägerwerk AG & Co. KGaA, 23558 Lübeck (DE)
(72) Erfinder: Otte, Tobias, 23558 Lübeck (DE); Jacobi, Ralph-Peter, 23558 Lübeck (DE); Kaszás, Helena, 23558 Lübeck (DE); Konik, Janto, 23558 Lübeck (DE)

(57) **Zusammenfassung**

Erfindungsgemäß wird ein Strömungswiderstandsrohr für einen Durchflusssensor bereitgestellt. Das Strömungswiderstandsrohr weist einen ersten Gehäuseteil und einen zweiten Gehäuseteil und ein zwischen dem ersten Gehäuseteil und dem zweiten Gehäuseteil angeordnetes Lagerelement auf. Das Lagerelement umfasst eine erste Lagerhälfte, eine zweite Lagerhälfte und ein Blendenelement. Das Blendenelement ist zwischen der ersten Lagerhälfte und der zweiten Lagerhälfte kraftschlüssig, insbesondere kraftschlüssig dichtend, aufgenommen, so dass das Blendenelement gegenüber der ersten Lagerhälfte und der zweiten Lagerhälfte schwenkbar ist. Es wird ferner ein entsprechender Durchflusssensor und ein Verfahren zur Herstellung des Strömungswiderstandsrohrs bereitgestellt. Die erste Lagerhälfte und die zweite Lagerhälfte sind durch ein Dichtmittel abdichtend verbunden.

## Beschreibung

Die vorliegende Erfindung betrifft ein Strömungswiderstandsrohr für einen Durchflusssensor, einen entsprechenden Durchflusssensor und ein Verfahren zur Herstellung eines Strömungswiderstandsrohrs.

Strömungswiderstandsrohre finden Verwendung im Bereich der Medizintechnik, insbesondere als Teil von Durchflusssensoren. Durchflusssensoren werden beispielsweise in Verbindung mit Beatmungsgeräten verwendet, um einen Durchfluss von Gasen in Richtung eines Patienten und/oder in Richtung von einem Patienten zu messen.

Das Messprinzip von Durchflusssensoren basiert auf einem im Strömungswiderstandsrohr als Strömungswiderstand angeordneten öffenbaren Blendenelement, welches bei Durchströmung des Strömungswiderstandsrohrs einen Druckabfall verursacht. Dieser Druckabfall kann über Druckmessöffnungen vor und hinter dem Blendenelement gemessen werden, beispielsweise mit einem Drucksensor, und korreliert mit dem Durchfluss.

Eine generelle Möglichkeit, ein Strömungswiderstandsrohr für einen Durchflusssensor zu konstruieren, ist aus EP 0 331 773 A1 und EP 3 710 788 A1 bekannt.

Weitere Strömungswiderstandsrohre sind aus CN 2 02 403 742 U und CN 2 15 674 115 U bekannt.

Es ist wesentlich für die Funktionsweise des Strömungswiderstandsrohrs bzw. des entsprechenden Durchflusssensors, dass das Blendenelement ein reproduzierbares Öffnungsverhalten aufweist, da dieses das Messverhalten und insbesondere die Kennlinie des Strömungswiderstandsrohrs bestimmt. Das Öffnungsverhalten ist, neben anderen mechanischen Eigenschaften, insbesondere von der Lagerung des Blendenelements abhängig. Je reproduzierbarer die Lagerung ausgeführt werden kann, desto reproduzierbarer ist auch das Öffnungsverhalten des Blendenelements. Die Lagerung des Blendenelements kann im Allgemeinen entweder durch Klemmung oder durch lose Aufnahme zwischen zwei Begrenzungsflächen erfolgen.

Durchflusssensoren bzw. deren Strömungswiderstandsrohre sind je nach Einbausituation kontaminierten Gasen ausgesetzt. Bekannte Strömungswiderstandsrohre mit loser Lagerung des Blendenelements, wie beispielsweise in EP 3 710 788 A1 beschrieben, erfüllen daher die Hygieneanforderungen für ein wiederverwendbares Strömungswiderstandsrohr nicht, da in den bei der losen Lagerung vorhandenen Lagerspalt Verunreinigungen eindringen können und der Lagerspalt schlecht zu reinigen ist.

Der vorliegenden Erfindung liegt daher die Aufgabe zugrunde, ein Strömungswiderstandsrohr für einen Durchflusssensor bereitzustellen, welches aufbereitbar, d.h. reinigbar und wiederverwendbar ist und dabei ein reproduzierbares Messverhalten aufweist. Ferner liegt der Erfindung die Aufgabe zu Grunde, einen entsprechenden Durchflusssensor und ein entsprechendes Verfahren zur Herstellung eines solchen Strömungswiderstandsrohrs bereitzustellen.

Diese und weitere Aufgaben werden gelöst durch die Gegenstände der Ansprüche 1, 9 und 10. Die abhängigen Ansprüche stellen vorteilhafte Ausgestaltungen der Erfindung bereit.

Erfindungsgemäß wird ein Strömungswiderstandsrohr für einen Durchflusssensor bereitgestellt. Das Strömungswiderstandsrohr weist einen ersten Gehäuseteil und einen zweiten Gehäuseteil und ein zwischen dem ersten Gehäuseteil und dem zweiten Gehäuseteil angeordnetes Lagerelement auf. Das Lagerelement umfasst eine erste Lagerhälfte, eine zweite Lagerhälfte und ein Blendenelement. Das Blendenelement ist zwischen der ersten Lagerhälfte und der zweiten Lagerhälfte kraftschlüssig, insbesondere kraftschlüssig dichtend, aufgenommen, so dass das Blendenelement gegenüber der ersten Lagerhälfte und der zweiten Lagerhälfte schwenkbar ist. Die erste Lagerhälfte und die zweite Lagerhälfte sind, besonders bevorzugt an einer in Umfangsrichtung außenliegenden Fläche, durch ein Dichtmittel abdichtend verbunden.

Der Erfindung liegt insofern zunächst die Erkenntnis zu Grunde, dass durch Bereitstellung eines zum ersten Gehäuseteil und zweiten Gehäuseteil separaten Lagerelements zur Aufnahme des Blendenelements die Lagerung des Blendenelement mit hoher Genauigkeit erreicht werden kann. Somit kann ein reproduzierbares Öffnungsverhalten des Blendenelements erreicht werden, wobei lediglich die Fertigungsgenauigkeit für das Lagerelement hoch sein muss, an die Fertigungsgenauigkeit für das erste Gehäuseteil und das zweite Gehäuseteil jedoch - da diese das Blendenelements erfindungsgemäß nicht unmittelbar lagern - keine hohen Anforderungen gestellt werden müssen. Durch die erfindungsgemäße Funktionsseparation (Lagerung des Blendenelements durch das separate Lagerelement, Bildung des Gehäuses des Strömungswiderstandsrohrs durch das erste Gehäuseteil und das zweite Gehäuseteil) wird es also zum einen ermöglicht, die Gehäuseteile mit einfach und kostengünstig erreichbarer, geringerer Fertigungsgenauigkeit bereitzustellen und zum anderen, dennoch ein reproduzierbares Öffnungsverhalten mittels Lagerung des Blendenelements durch das genau gefertigte und mit engen Toleranzen versehebare Lagerelement zu erreichen.

Ferner liegt der Erfindung die weitere Erkenntnis zu Grunde, dass durch Klemmung des Blendenelement zwischen der ersten Lagerhälfte und der zweiten Lagerhälfte, d.h. durch die kraftschlüssige Aufnahme, eine für die Verwendung als aufbereitbares bzw. wiederverwendbares Strömungswiderstandsrohr ausreichende Dichtwirkung in Richtung des Lagerelement-Inneren (d.h. eines zwischen der ersten Lagerhälfte und der zweiten Lagerhälfte ggf. gebildeten Hohlraums) erzielt werden kann, ohne dass dort zusätzliche Dichtmittel vorgesehen sein müssen.

Außerdem liegt der Erfindung die Erkenntnis zu Grunde, dass die Dichtigkeit des Lagerelements gegen das Eindringen von Verunreinigungen in Richtung des Lagerelement-Inneren durch Bereitstellung eines Dichtmittels weiter verbessert werden kann.

Unter einem Lagerelement wird erfindungsgemäß eine Baugruppe umfassend wenigstens die erste Lagerhälfte, die zweite Lagerhälfte und das Blendenelement verstanden, welche durch Verbindung der genannten Komponenten erhalten wird.

Besonders bevorzugt sind die erste Lagerhälfte und die zweite Lagerhälfte stoffschlüssig miteinander verbunden, so dass ein während der Herstellung des Lagerelements bereitgestellter Spannungszustand bzw. Kraftschluss durch Verhinderung einer Rückstellung der Lagerhälften "eingefroren" werden kann. In anderen Worten bleibt der Spannungszustand, d.h. der Kraftschluss, durch den Stoffschluss erhalten und ist somit (im Rahmen der Steifigkeit des Lagerelements) unabhängig von eventuellen weiteren Presskräften, die durch den Einbau zwischen das erste Gehäuseteil und das zweite Gehäuseteil resultieren könnten. Mit dieser Maßnahme kann sichergestellt werden, dass das Öffnungsverhalten des Blendenelements weitestgehend unabhängig vom den Einbau des Lagerelements ist.

Vorteilhaft sind das erste Gehäuseteil und/oder das zweite Gehäuseteil und/oder die erste Lagerhälfte und/oder die zweite Lagerhälfte aus einem oder mehreren sterilisierbaren und autoklavierbaren Kunststoff hergestellt oder umfassen einen solchen. Beispiele für einen geeigneten Kunststoff sind Polyetheretherketon (PEEK), Polyphenylsulfon (PPSU), Polyoxymethylen (POM-C) und Polypropylen (PP). Alle oder einige der vorgenannten Komponenten können ergänzend oder alternativ aus einem Metall wie einem Edelstahl der Sorte AISI 304 gefertigt sein oder einen solchen umfassen. Eine kombinierte Ausführungsform kann vorsehen, dass ein Kern der Gehäuseteile und/oder der Lagerhälften aus einem Metall gefertigt wird, wobei der so erhaltene Kern oder die so erhaltenen Kerne in einem anschließenden Herstellungsschritt durch einen Kunststoff umspritzt wird oder werden.

Unter einem Blendenelement wird erfindungsgemäß ein mittels Lagerhälften im Strömungswiderstandsrohr als Strömungswiderstand angeordnetes, wenigstens teilweise öffenbares Element verstanden, welches bei Durchströmung des Strömungskanals einen Druckabfall verursacht. Hierzu kann das Blendenelement einen Gelenkabschnitt und einen um diesen durch elastische Deformation schwenkbaren Blendenabschnitt (in anderen Worten eine "Klappe") aufweisen. Somit kann erreicht werden, dass eine durch Schwenken freigebbare Durchtrittsöffnung mit steigendem Durchfluss größer werden und damit eine Linearisierung einer Differenzdruck-Durchfluss-Kennlinie (im Folgenden auch lediglich als Kennlinie bezeichnet) erreicht werden kann.

Das Blendenelement ist vorteilhaft als im Wesentlichen flächiges Element, beispielsweise als Metall- oder Kunststofffolie, ausgeführt, in welches ein Schlitz vorbestimmter Form eingebracht ist, um das Blendenelement in einen äußeren Halteabschnitt, den Gelenkabschnitt und den Blendenabschnitt zu unterteilen, wie dies beispielsweise in der EP 0 331 773 A1 gezeigt ist. Die genaue Form des Schlitzes ist jedoch nicht auf die in EP 0 331 773 A1 gezeigte Form beschränkt und kann andersartig ausgebildet sein.

Unter einem Dichtmittel wird ein Mittel zur Abdichtung verstanden. Ein Dichtmittel kann dabei ein Dichtelement oder eine stoffschlüssige Verbindung sein. Ein Beispiel für ein Dichtelement ist ein Dichtring, eine Flachdichtung, eine Profildichtung und dergleichen. Ein Beispiel für eine stoffschlüssige Verbindung ist Schweißen, wie Laserschweißen, oder Kleben.

Ferner erfindungsgemäß ist zwischen dem Blendenelement und jeder der ersten Lagerhälfte und der zweiten Lagerhälfte kein Dichtelement angeordnet.

Im Rahmen der Erfindung wurde erkannt, dass eine Anordnung eines Dichtelements zwischen dem Blendenelement und einer oder beider der ersten Lagerhälfte und der zweiten Lagerhälfte zu einer Verschlechterung des Messverhaltens führt, da das Öffnungsverhalten des Blendenelements zu stark verfälscht würde. Durch den Verzicht auf Dichtelemente an beiden Grenzflächen kann das Messverhalten des Strömungswiderstandsrohrs folglich verbessert werden.

Vorzugsweise umschließt die erste Lagerhälfte das Blendenelement in einer Blendenelement-Ebene vollständig, und die zweite Lagerhälfte umschließt das Blendenelement in der Blendenelement-Ebene vollständig.

Unter der Blendenelement-Ebene wird die Haupterstreckungsebene des Blendenelements verstanden.

Durch das vollständige Umschließen des Blendenelements ist es möglich, eine möglichst große Fläche des Blendenelements kraftschlüssig zwischen den Blendenelementen aufzunehmen, wodurch die Flächenpressung, welche auf das Blendenelement wirkt, vorteilhaft reduziert werden kann.

Für den bevorzugten Fall, dass das Blendenelement den Gelenkabschnitt, den Blendenabschnitt und den äußeren Halteabschnitt aufweist, ist ferner bevorzugt, dass die zwischen der ersten Lagerhälfte und der zweiten Lagerhälfte gebildete Kontaktfläche den äußeren Halteabschnitt vollständig aufnimmt.

In diesem Zusammenhang ist es ganz besonders bevorzugt, dass der äußere Halteabschnitt eine kreisförmig begrenzte Fläche bildet, da auf diese Weise die zur Klemmung zwischen der ersten Lagerhälfte und der zweiten Lagerhälfte zur Verfügung stehende Fläche vorteilhaft vergrößert werden kann.

Vorzugsweise sind die erste Lagerhälfte und der erste Gehäuseteil durch ein erstes Dichtelement abdichtend verbunden. Ergänzend oder alternativ wird bevorzugt, dass die zweite Lagerhälfte und der zweite Gehäuseteil durch ein zweites Dichtelement abdichtend verbunden sind.

Auf diese Weise können eventuell zwischen dem Lagerelement, dem ersten Gehäuseteil und dem zweiten Gehäuseteil vorhandene Hohlräume gegen das strömungskanalseitige Eindringen von Verunreinigungen abgedichtet werden, was die Aufbereitbarkeit bzw. Wiederverwendbarkeit des Strömungswiderstandsrohrs vorteilhaft weiter verbessert.

Das erste Dichtelement und/oder das zweite Dichtelement kann von dem jeweiligen Gehäuseteil und/oder dem Lagerelement separat ausgebildet sein oder alternativ integral mit dem jeweiligen Gehäuseteil oder dem Lagerelement ausgebildet sein. Als separate Dichtelemente kommen beispielsweise Dichtringe, Flachdichtungen oder Profildichtungen in Betracht. Eine integrale Ausbildung ist beispielsweise durch ein 2-Komponenten-Spritzgussverfahren möglich.

In einer Alternative zu der Bereitstellung des ersten Dichtelements und/oder des zweiten Dichtelements sind die erste Lagerhälfte und der erste Gehäuseteil sowie die zweite Lagerhälfte und der zweite Gehäuseteil abdichtend verbunden, indem die jeweilige Lagerhälfte durch ausreichend hohe Flächenpressung gegen das jeweilige Gehäuseteil sowie durch geeignete Materialwahl selber als Dichtmittel fungiert.

Bevorzugt sind der erste Gehäuseteil und der zweite Gehäuseteil in einem außenliegenden Bereich, d.h. in einem von dem Strömungskanal wegweisenden Bereich, abdichtend miteinander verbunden, beispielsweise durch ein weiteres Dichtmittel wie durch einen Dichtelement oder durch eine stoffschlüssige Dichtung, welche durch ein stoffschlüssiges Verbinden wie Laserschweißen erzielt werden kann.

Vorzugsweise ist das erste Dichtelement als Teil einer ersten Trägerstruktur ausgebildet, wobei die erste Trägerstruktur in eine korrespondierende Aufnahme des ersten Gehäuseteils eingesetzt ist. Ergänzend oder alternativ ist bevorzugt, dass das zweite Dichtelement als Teil einer zweiten Trägerstruktur ausgebildet ist, wobei die zweite Trägerstruktur in eine korrespondierende Aufnahme des zweiten Gehäuseteils eingesetzt ist.

Auf diese Weise ist eine einfache Montage des ersten Dichtelements und/oder des zweiten Dichtelements möglich, da die Handhabung des jeweiligen Dichtelements durch Bereitstellung der jeweiligen Trägerstruktur vereinfacht ist. Ferner ist es durch das gezielte Einsetzen der jeweiligen Trägerstruktur in die jeweilige Aufnahme möglich, die erwünschte örtliche Lage des jeweiligen Dichtelements in dem jeweiligen Gehäuseteil sicherzustellen und ein Verrutschen sowohl bei der Montage als auch im Betrieb bzw. bei der Aufbereitung des Strömungswiderstandsrohr zu verhindern, so dass die Dichtwirkung gegenüber einem losen Einlegen eines Dichtelements in einen Gehäuseteil vorteilhaft verbessert bzw. sichergestellt ist.

Ferner kann auf diese Weise sichergestellt werden, dass das erste und/oder das zweite Dichtelement für den unerwünschten Fall, dass dieses sich lockert, nicht durch das Strömungswiderstandsrohr in Richtung eines Patienten gelangen kann, da es durch die Trägerstruktur gehalten wird. In diesem Zusammenhang ist es besonders vorteilhaft, wenn die Trägerstruktur so ausgebildet ist, dass diese größer ist als der Querschnitt des Strömungswiderstandsrohrs. Ergänzend oder alternativ kann in dem Strömungswiderstandsrohr strömungsaufwärts und strömungsabwärts von dem Lagerelement jeweils eine Fangvorrichtung wie ein Gitter oder Kreuz, beispielsweise gefertigt aus Metall, vorgesehen sein.

Vorzugsweise sind das erste Dichtelement und das zweite Dichtelement sowie, wenn vorhanden, die erste Trägerstruktur und die zweite Trägerstruktur identisch ausgebildet.

Aufgrund der so erzielten Reduzierung der Teilevielfalt können die Fertigungskosten des Strömungswiderstandsrohrs vorteilhaft reduziert werden.

Vorzugsweise weist das Lagerelement, besonders bevorzugt die erste Lagerhälfte oder zweite Lagerhälfte, ein Kopplungselement auf, welches mit einer entsprechenden Kopplungsaufnahme des ersten Gehäuseteils oder des zweiten Gehäuseteils, vorzugsweise formschlüssig, verbindbar ist, wobei das Kopplungselement vorzugsweise nicht mit dem entsprechenden anderen zweiten Gehäuseteil oder ersten Gehäuseteil verbindbar ist.

Auf diese Weise kann das Lagerelement mittels des Kopplungselements während der Montage sicher in dem entsprechenden Gehäuseteil gehalten werden, wodurch ein Verrutschen des Lagerelements und vorzugsweise ferner des entsprechenden Dichtelements, insofern vorhanden, während der Montage verhindert werden kann.

Es ist bevorzugt, dass eine Mehrzahl von Kopplungselementen und korrespondierenden Kopplungsaufnahmen vorgesehen ist, beispielsweise vier Kopplungselemente und vier Kopplungsaufnahmen, um diese vorteilhafte Wirkung weiter zu verbessern.

Für den bevorzugten, optionalen Fall, dass das Kopplungselement vorzugsweise nicht mit dem entsprechenden anderen zweiten Gehäuseteil oder ersten Gehäuseteil verbindbar ist, kann sichergestellt werden, dass eine Montage des Lagerelements nur in eindeutiger Orientierung möglich ist. Insbesondere für den Fall, dass das Blendenelement lediglich uni-direktional schwenkbar ist, kann dabei die Funktionalität des Strömungswiderstandsrohrs gewährleitet werden.

Vorzugsweise weist die erste Lagerhälfte oder die zweite Lagerhälfte zwei Aufnahmeelemente zur Aufnahme des Blendenelements auf, wobei durch die Aufnahmeelemente eine Orientierung des Blendenelements relativ zur entsprechenden ersten Lagerhälfte oder zweiten Lagerhälfte festgelegt ist.

Auf diese Weise kann sichergestellt werden, dass das Blendenelement innerhalb des Strömungswiderstandsrohrs in vorbestimmter Orientierung angeordnet ist. Somit kann die Fertigung des Strömungswiderstandsrohrs verbessert werden.

Es ist bevorzugt, dass die Aufnahme des Blendenelements durch die Aufnahmeelemente ohne entsprechende Spannungen innerhalb der Blendenelement-Ebene erfolgt. Hierzu können die Aufnahmeelemente beispielsweise als zylindrische oder kegelstumpfförmige Vorsprünge ausgeführt sein und das Blendenelement korrespondierende kreisförmige oder (ggf. offene) Langloch-artige Aussparungen umfassen, welche zur Aufnahme des Blendenelements mit den Vorsprüngen in Eingriff bringbar sind. Durch geeignete Bemaßung dieser Bauteil-Paarung kann sichergestellt werden, dass innerhalb der Blendenelement-Ebene keine Zug- oder Druckspannungen eingeleitet werden. Beispielsweise kann ein geringes Spiel zwischen den Aufnahmeelementen und den Aussparungen vorgesehen sein.

Erfindungsgemäß wird ferner ein Durchflusssensor, aufweisend ein vorbeschriebenes Strömungswiderstandsrohr bereitgestellt.

Das Strömungswiderstandsrohr kann strömungsaufwärts und strömungsabwärts von dem Blendenelement jeweils eine Druckmessöffnung aufweisen, welche in strömungstechnischer Verbindung einerseits mit dem Strömungskanal, andererseits mit einem Differenzdrucksensor stehen kann. Der Differenzdrucksensor kann lösbar mit den Druckmessöffnungen verbindbar sein. Der Durchflusssensor kann ferner eine Steuer- und Auswerteeinheit wie einen Mikroprozessor oder eine Schnittstelle zur Verbindung mit einer Steuer- und Auswerteeinheit umfassen. Die Steuer- und Auswerteeinheit kann eingerichtet sein, eine Analog/Digital-Wandlung des durch den Durchflusssensor gemessenen und als Signal bereitgestellten Differenzdrucks vorzunehmen und den so digitalisierten Differenzdruck mit einer in einer Speichereinheit des Durchflusssensors oder eines verbundenen Medizingeräts hinterlegten Look-up-Tabelle zu vergleichen, um einen Durchflussmesswert zu bestimmen und diesen über eine Datenschnittstelle bereitzustellen.

Vorzugsweise sind das Blendenelement und die Strömungsgeometrie des Strömungskanals so ausgestaltet, dass das Strömungswiderstandsrohr bzw. der Durchflusssensor eine lineare Kennlinie aufweist.

Vorzugsweise ist ein eventuell zwischen dem ersten Gehäuseteil und dem zweiten Gehäuseteil vorhandener Hohlraum durch ein geeignetes Mittel wenigstens teilweise, vorzugsweise vollständig verfüllt. Ein geeignetes Mittel ist beispielsweise eine Dichtmasse. Hierdurch kann das Volumen vorhandener Hohlräume vorteilhaft reduziert werden.

Erfindungsgemäß wird außerdem ein Verfahren zur Herstellung eines vorbeschriebenen Strömungswiderstandsrohrs bereitgestellt. Das Verfahren umfasst die Schritte: Bereitstellen der ersten Lagerhälfte und der zweiten Lagerhälfte, Anordnen des Blendenelements innerhalb der ersten Lagerhälfte, Verpressen der ersten Lagerhälfte und der zweiten Lagerhälfte zur kraftschlüssigen Aufnahme des Blendenelements, Bereitstellen des ersten Gehäuseteils und des zweiten Gehäuseteils, Verbinden von dem ersten Gehäuseteil, dem zweiten Gehäuseteil und dem Lagerelement, um das Strömungswiderstandsrohr zu erhalten.

Auf diese Weise kann das Strömungswiderstandsrohr vorteilhaft erhalten werden.

Besonders bevorzugt findet, während die erste Lagerhälfte und die zweite Lagerhälfte verpresst werden, ein Fügen der ersten Lagerhälfte und der zweiten Lagerhälfte statt, um das Lagerelement zu erhalten. Auf diese Weise kann der beim Verpressen erzeugte Spannungszustand durch das Lagerelement aufrechterhalten werden. Dies kann beispielsweise geschehen, indem während des Verpressens die erste Lagerhälfte und die zweite Lagerhälfte stoffschlüssig verbunden werden, beispielsweise durch Laserschweißen.

Besonders bevorzugt geschieht das Verpressen nicht durch Verbinden des ersten Gehäuseteils und des zweiten Gehäuseteils und entsprechende Krafteinleitung in das Lagerelement, obwohl dies grundsätzlich umfasst ist, sondern durch Bereitstellung eines Presskraft mittels einer Pressvorrichtung. Die Pressvorrichtung ist vorzugsweise hinsichtlich der aufgebrachten Verpresskraft kraftgeregelt oder kraftgesteuert im Gegensatz zu einem weggesteuerten Verpressen, so dass der beim Verpressen erzeugte Spannungszustand insbesondere unter Berücksichtigung von Bauteiltoleranzen besonders reproduzierbar erzielt werden kann.

Das Verfahren kann darüber hinaus weitere Schritte umfassen, insbesondere die Folgenden: Abdichten der erste Lagerhälfte und der zweite Lagerhälfte, vorzugsweise an einer in Umfangsrichtung außenliegenden Fläche, durch das Dichtmittel und/oder abdichtendes Verbinden der ersten Lagerhälfte und des erste Gehäuseteils durch das erste Dichtelement und/oder abdichtendes Verbinden der zweiten Lagerhälfte und des zweiten Gehäuseteils durch ein zweites Dichtelement und/oder formschlüssiges Verbinden des Kopplungselements mit der entsprechenden Kopplungsaufnahme des ersten oder zweiten Gehäuseteils.

Für den Fall, dass die erste Lagerhälfte oder die zweite Lagerhälfte zwei Aufnahmeelemente zur Aufnahme des Blendenelements aufweist, kann das Verfahren ferner den Schritt: Aufnahme des Blendenelements durch die Aufnahmeelemente aufweisen.

Für den Fall, dass das erste Dichtelement und/oder das zweite Dichtelement vorgesehen sind, kann das Verfahren ferner den oder die folgenden Schritte umfassen: Einsetzen der ersten Trägerstruktur in eine korrespondierende Aufnahme des ersten Gehäuseteils und/oder Einsetzen der zweiten Trägerstruktur in eine korrespondierende Aufnahme des zweiten Gehäuseteils.

Diese und weitere Merkmale und Vorteile der Erfindung ergeben sich auch aus der nachstehenden Figurenbeschreibung. Dabei zeigt:
- **Fig. 1**: ein Ausführungsbeispiel eines erfindungsgemäßen Strömungswiderstandsrohrs in abgebrochener Schnittansicht von der Vorderseite,
- **Fig. 2**: ein Ausführungsbeispiel eines weiteren erfindungsgemäßen Strömungswiderstandsrohrs in abgebrochener Schnittansicht von der Vorderseite,
- **Fig. 3a**: ein Ausführungsbeispiel eines erfindungsgemäßen ersten Gehäuseteils in Seitenansicht,
- **Fig. 3b**: ein Ausführungsbeispiel eines erfindungsgemäßen zweiten Gehäuseteils in Seitenansicht,
- **Fig. 4**: ein Ausführungsbeispiel einer erfindungsgemäßen Trägerstruktur in Seitenansicht,
- **Fig. 5**: ein Ausführungsbeispiel eines erfindungsgemäßen Blendenelements in Seitenansicht,
- **Fig. 6**: ein Ausführungsbeispiel einer erfindungsgemäßen ersten Lagerhälfte oder zweiten Lagerhälfte in Seitenansicht,
- **Fig. 7**: ein Ausführungsbeispiel eines erfindungsgemäßen Lagerelements von der Vorderseite,
- **Fig. 8**: ein Ausführungsbeispiel eines erfindungsgemäßen Verfahrens,
- **Fig. 9**: ein weiteres Ausführungsbeispiel eines erfindungsgemäßen Blendenelements.

Erfindungsgemäß wird ein Strömungswiderstandsrohr 100 für einen Durchflusssensor bereitgestellt.

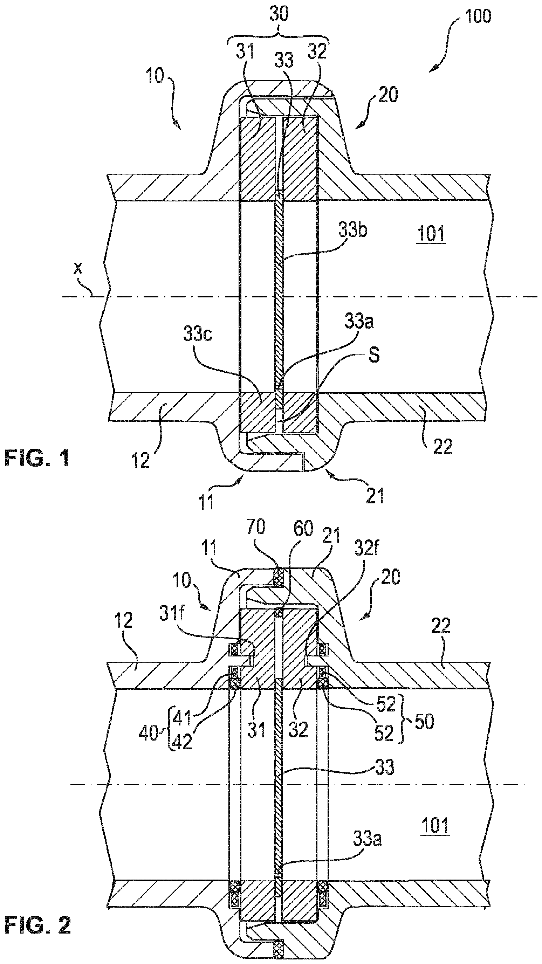

In Fig. 1 und 2 sind zwei Ausführungsformen eines erfindungsgemäßen Strömungswiderstandsrohrs 100 in abgebrochenen Schnittansichten von der Vorderseite dargestellt.

Gleiche Bezugszeichen in den Figuren bezeichnen jeweils gleiche Elemente oder unterschiedliche Ausführungsformen von Elementen.

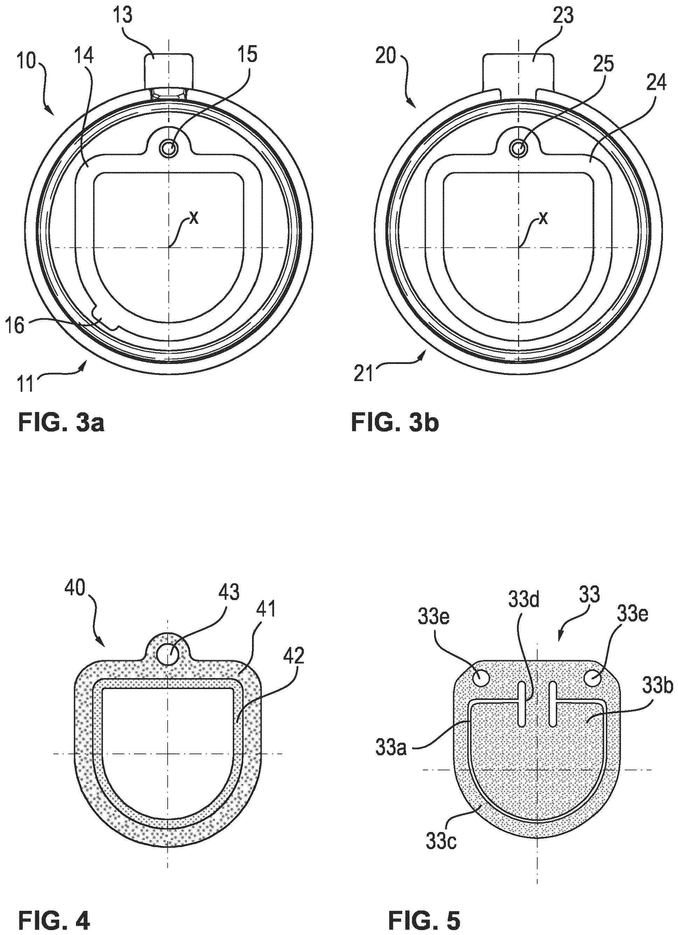

Das Strömungswiderstandsrohr 100 weist einen ersten Gehäuseteil 10 und einen zweiten Gehäuseteil 20 auf. Das in Fig. 2 verwendete erste Gehäuseteil 10 bzw. zweite Gehäuseteil 20 ist insofern in Fig. 3a bzw. 3b jeweils als Seitenansicht dargestellt.

Das erste Gehäuseteil 10 kann, wie dies in Fig. 1 und 2 ersichtlich ist, eine erste Gehäusewandung 12 umfassen, welche einen ersten Flanschabschnitt 11 zur Verbindung mit dem zweiten Gehäuseteil 20 bereitstellen kann.

Das zweite Gehäuseteil 20 kann, wie dies in Fig. 1 und 2 ersichtlich ist, eine zweite Gehäusewandung 22 umfassen, welche einen zweiten Flanschabschnitt 21 zur Verbindung mit dem erstem Gehäuseteil 10 bereitstellen kann. Der erste Flanschabschnitt 11 und der zweite Flanschabschnitt 21 können somit korrespondierend ausgebildet ein.

Das erste Gehäuseteil 10 und das zweite Gehäuseteil 20 nach Fig. 2 unterscheiden sich von dem ersten Gehäuseteil 10 und dem zweiten Gehäuseteil 20 nach Fig. 1 lediglich durch noch zu beschreibenden Aufnahmen 14, 15, 24, 25.

Nicht in Fig. 1 und 2 ersichtlich aber Fig. 3a und 3b entnehmbar ist, dass der erste Gehäuseteil 10 eine erste Druckmessöffnung 13 und der zweite Gehäuseteil 20 eine zweite Druckmessöffnung 23 umfassen kann, mittels welchen ein durch das Strömungswiderstandsrohr 100 entlang Strömungskanalsachse X gebildeter Strömungskanal 101 in strömungstechnische Verbindung mit einem Druckmesssensor bringbar ist. In den gezeigten Beispielen ist die Strömungskanalsachse X gerade ausgeführt, es sind jedoch auch andere Formen möglich. Ebenso kann ein Querschnitt des Strömungskanals 101 abweichend von den dargestellten Beispielen nichtzylindrisch sein.

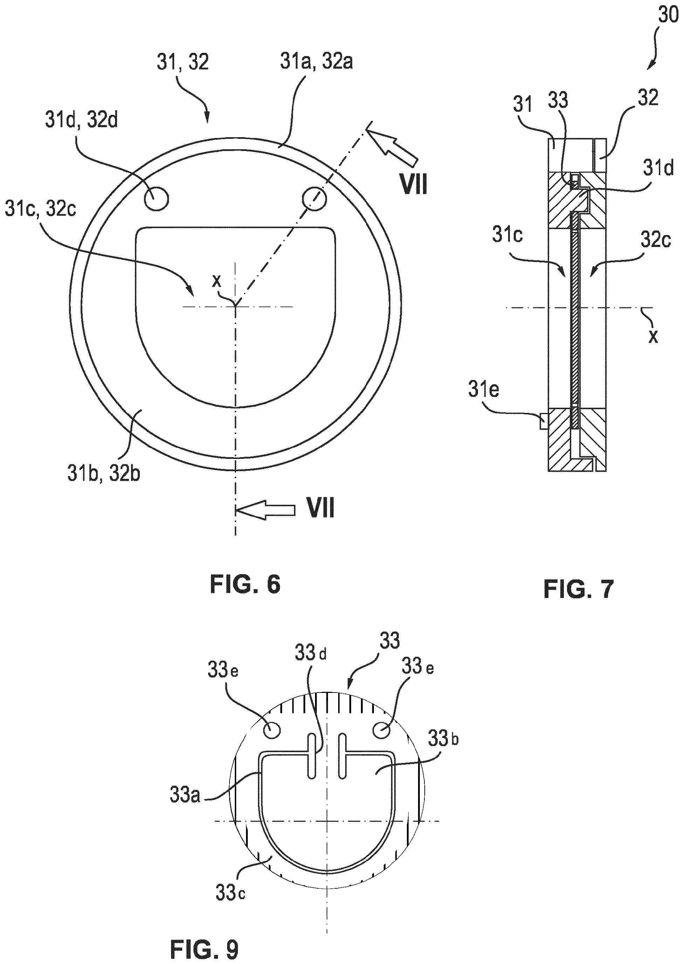

Wie ebenfalls in Fig. 1 und 2 in zwei verschiedenen Ausführungsformen gezeigt und als weitere Ausführungsform in Fig. 7 dargestellt ist, weist das Strömungswiderstandsrohr 100 ferner ein zwischen dem ersten Gehäuseteil 10 und dem zweiten Gehäuseteil 20 angeordnetes Lagerelement 30 auf.

Das erfindungsgemäße Lagerelement 30 umfasst in allen Ausführungsformen eine erste Lagerhälfte 31, eine zweite Lagerhälfte 32 und ein Blendenelement 33, wobei das Blendenelement 33 zwischen der ersten Lagerhälfte 31 und der zweiten Lagerhälfte 32 kraftschlüssig aufgenommen ist, so dass das Blendenelement 33 gegenüber der ersten Lagerhälfte 31 und der zweiten Lagerhälfte 32 schwenkbar ist.

Wie in den Figuren ersichtlich ist, ist es bevorzugt, dass die erste Lagerhälfte 31 das Blendenelement 33 in einer Blendenelement-Ebene vollständig umschließt und dass die zweite Lagerhälfte 32 das Blendenelement 33 in der Blendenelement-Ebene vollständig umschließt.

Ein Ausführungsbeispiel eines Blendenelements 33, welches in allen Ausführungsformen des Lagerelements 30 vorgesehen sein kann, ist in Fig. 5 dargestellt. Das Blendenelement 33 nach Fig. 5 weist einen in dieses eingebrachten Schlitz 33a auf, welcher das Blendenelement 33 funktionell in einen um Gelenkabschnitt 33d schwenkbaren Blendenabschnitt 33b und einen den Gelenkabschnitt 33d tragenden äußeren Halteabschnitt 33c unterteilt. Das Blendenelement 33 kann ferner Aufnahmeöffnungen 33e aufweisen.

Die Form des äußeren Halteabschnitts 33c ist im Wesentlichen beliebig. In einem weiteren Ausführungsbeispiel eines Blendenelements 33, welches in allen Ausführungsformen des Lagerelements 30 vorgesehen sein kann, ist in Fig. 9 dargestellt. Das Blendenelement 33 nach Fig. 9 unterscheid sich von dem nach Fig. 5 lediglich darin, dass der äußere Halteabschnitt 33c eine kreisförmig begrenzte Fläche bildet.

Das Blendenelement 33 ist in allen Ausführungsformen zwischen der ersten Lagerhälfte 31 und der zweiten Lagerhälfte 32 kraftschlüssig aufgenommen. Beispielsweise kann der äußere Halteabschnitt 33c durch die erste Lagerhälfte 31 und die zweite Lagerhälfte 32 kraftschlüssig aufgenommen sein, so dass das der Blendenabschnitt 33b um den Gelenkabschnitt 33d elastisch schwenkbar ist.

Der in Bezug auf das Blendenelement 33 außenliegende Rand des Schlitzes 33a und eine Innenwand des Strömungskanals 101 können teilweise bündig sein.

In der Ausführungsform nach Fig. 1 ist das Blendenelements 33 zwischen der ersten Lagerhälfte 31 und der zweiten Lagerhälfte 32 kraftschlüssig aufgenommen, indem der erste Gehäuseteil 10 und der zweite Gehäuseteil 20 relativ zueinander verspannt sind und so über die erste Lagerhälfte 31 und die zweite Lagerhälfte 32 den Kraftschluss bereitstellen. Der erste Gehäuseteil 10 und der zweite Gehäuseteil 20 können hierzu abstandsveränderlich, beispielsweise mittels Schrauben oder mittels einer Gewindepaarung, verbunden sein. Über eine Veränderung des Abstandes zwischen dem ersten Gehäuseteil 10 und dem zweiten Gehäuseteil 20 kann somit die gewünschte Höhe der Verspannkraft, d.h. die den Kraftschluss definierende Kraft, eingestellt werden.

In der Ausführungsform nach Fig. 2 und in der Ausführungsform nach Fig. 3 wird das Blendenelement 33 zwischen der ersten Lagerhälfte 31 und der zweiten Lagerhälfte 32 kraftschlüssig aufgrund geeigneten Verspannens der ersten Lagerhälfte 31 und der zweiten Lagerhälfte 32 relativ zueinander erreicht. Hierzu werden die erste Lagerhälfte 31 und die zweite Lagerhälfte 32 mit dem dazwischen angeordneten Blendenelement 33 während der Herstellung des Lagerelements 30 gegeneinander verspannt und der so erzielte Spannungszustand durch, beispielsweise stoffschlüssiges, Verbinden der beiden Lagerhälften 31, 32 fixiert.

Durch Verbindung von dem ersten Gehäuseteil 10, dem zweiten Gehäuseteil 20 und dem Lagerelement 30 kann somit ein durchgängiger Strömungskanal 101 bereitgestellt werden, in welchem das Blendenelement 33 schwenkbar angeordnet ist.

Es ist erfindungsgemäß und in den Fig. 1, 2 und 7 ersichtlich, dass zwischen dem Blendenelement 33 und jeder der ersten Lagerhälfte 31 und der zweiten Lagerhälfte 32 kein Dichtelement angeordnet ist.

Erfindungsgemäß und somit in allen Ausführungsformen vorgesehen sowie in Fig. 2 dargestellt ist, dass die erste Lagerhälfte 31 und die zweite Lagerhälfte 32 durch ein Dichtmittel 60 abdichtend verbunden sind. Als Dichtmittel 60 kommt insofern beispielsweise ein Dichtelement wie ein Dichtring oder eine Dichtung mittels stoffschlüssigen Verbindens, beispielsweise durch Laserschweißen in Betracht. Eine abdichtende Verbindung der ersten Lagerhälfte 31 und der zweiten Lagerhälfte 32 durch das Dichtmittel 60 ist in der Ausführungsform nach Fig. 7 beispielsweise realisiert, indem der in Bezug auf das Lagerelement 30 außenliegende, umlaufende Spalt durch das Dichtmittel 60 verschlossen werden kann.

Es ist bevorzugt und in allen Ausführungsformen möglich sowie konkret in der Ausführungsform nach Fig. 2 dargestellt, dass die erste Lagerhälfte 31 und der erste Gehäuseteil 10 durch ein erstes Dichtelement 40, 42 abdichtend verbunden sein können, und/oder die zweite Lagerhälfte 32 und der zweite Gehäuseteil 20 durch ein zweites Dichtelement 50, 52 abdichtend verbunden sein können. Das jeweilige Dichtelement 40, 50 kann dabei beispielsweise eine Dichtung 42, 52 sein.

Es ist ferner bevorzugt und in allen Ausführungsformen möglich sowie konkret in der Ausführungsform nach Fig. 2 dargestellt, dass das erste Dichtelement 40, 42 als Teil einer ersten Trägerstruktur 41 ausgebildet ist, wobei die erste Trägerstruktur 41 in eine korrespondierende Aufnahme 14, 15 des ersten Gehäuseteils 10 eingesetzt ist und/oder wobei das zweite Dichtelement 50, 52 als Teil einer zweiten Trägerstruktur 51 ausgebildet ist, wobei die zweite Trägerstruktur 51 in eine korrespondierende Aufnahme 24, 25 des zweiten Gehäuseteils 20 eingesetzt ist.

Eine Ausführungsform eines ersten Dichtelements 40 zur Verwendung in allen Ausführungsformen ist beispielhaft in Fig. 4 dargestellt. Das dort gezeigte Dichtelement 40 weist eine erste Trägerstruktur 41 auf, welche - vorzugsweise unlösbar - eine Dichtung 42 aufnimmt. Das erste Dichtelement 40 bzw. die erste Trägerstruktur 41 kann ferner eine Trägeraufnahme 43 aufweisen. Das zweite Dichtelement 50 kann identisch zum ersten Dichtelement 40 ausgebildet sein, so dass auf eine separate Darstellung des zweiten Dichtelements 50 verzichtet wird.

Eine Ausführungsform einer korrespondierenden Aufnahme 14, 15 des ersten Gehäuseteils 10 ist in Fig. 3a dargestellt und eine Ausführungsform einer korrespondierenden Aufnahme 24, 25 des zweiten Gehäuseteils 20 ist in Fig. 3b dargestellt. Das erste Gehäuseteil 10 kann insofern eine erste Aufnahmenut 14 zur Aufnahme des ersten Dichtelements 40 aufweisen, deren Form im Wesentlichen der der ersten Trägerstruktur 41 entsprechen kann. Das erste Gehäuseteil 10 kann ferner einen ersten Aufnahmepin 15, d.h. einen Vorsprung, aufweisen, welcher mit der Trägeraufnahme 43 in Eingriff bringbar ist. Somit kann das erste Dichtelement 40 auf vorteilhafte Weise in dem ersten Gehäuseteil 10 aufgenommen werden. Der zweite Gehäuseteil 20 kann entsprechend dem ersten Gehäuseteil 10 eine zweite Aufnahmenut 24 zur Aufnahme des zweiten Dichtelements 50 aufweisen, deren Form im Wesentlichen der der zweiten Trägerstruktur 51 entsprechen kann. Das zweite Gehäuseteil 20 kann ferner einen zweiten Aufnahmepin 25 aufweisen, welcher mit einer Trägeraufnahme 53 der zweiten Trägerstruktur 51 in Eingriff bringbar ist. Somit kann das zweite Dichtelement 50 auf vorteilhafte und vergleichbare Weise in dem zweiten Gehäuseteil 20 aufgenommen werden.

Es ist bevorzugt und in allen Ausführungsformen möglich sowie konkret in Fig. 3a und 7 dargestellt, dass das Lagerelement 30 ein Kopplungselement 31e aufweist, welches mit einer entsprechenden Kopplungsaufnahme 16 des ersten Gehäuseteils 10 oder des zweiten Gehäuseteils 20 verbindbar ist, wobei das Kopplungselement 16 nicht mit dem entsprechenden anderen zweiten Gehäuseteil 20 oder ersten Gehäuseteil 10 verbindbar ist. Das Kopplungselement 31e kann beispielsweise ein Vorsprung oder eine Aussparung sein, wobei es im Beispiel nach Fig. 7 als Vorsprung ausgeführt ist. Die Kopplungsaufnahme 16 ist zum Kopplungselement korrespondierend ausgeführt und kann beispielsweise eine Aussparung oder ein Vorsprung sein, wobei sie im Beispiel nach Fig. 3a als Aussparung ausgeführt ist. Wie im Vergleich zwischen Fig. 3a und 3b ersichtlich wird, weist in der beispielhaften Ausführungsform lediglich das erste Gehäuseteil 10 die Kopplungsaufnahme 16 auf, nicht jedoch das zweite Gehäuseteil 20, so dass das Kopplungselement 31e lediglich mit dem ersten Gehäuseteil 10 verbindbar ist.

Es ist bevorzugt und in allen Ausführungsformen möglich sowie konkret in Fig. 6 und 7 dargestellt, dass die Lagerhälften 31, 32 einen ersten bzw. zweiten Lagerboden 31b, 32b, welcher eine Grundfläche der jeweiligen Lagerhälfte 31, 32 definiert, jeweils eine erste bzw. zweite Lagerwandung 31a, 32a, welche sich von dem jeweiligen Lagerboden 31b, 32b weg erstreckt und eine erste bzw. zweite Lageröffnung 31c, 32c, welche sich durch das jeweilige Lagerelement 31, 32 hindurch erstreckt, umfasst. Der jeweilige Lagerboden 31b, 32b bildet dabei auf seiner in Bezug auf das Lagerelement 30 innenliegenden Seite eine Lagerfläche, welche eingerichtet ist, das Blendenelement 33 klemmend bzw. kraftschlüssig aufzunehmen und muss daher wie beschrieben mit ausreichender Genauigkeit gefertigt werden, um ein reproduzierbares Öffnungsverhalten des Blendenelements 33 zu erreichen.

Es ist ferner bevorzugt und in allen Ausführungsformen möglich sowie konkret in Fig. 6 und 7 dargestellt, dass die erste Lagerhälfte 31 oder die zweite Lagerhälfte 32 zwei (oder mehr) Aufnahmeelemente 31d, 32d zur Aufnahme des Blendenelements 33 aufweist, wobei durch die Aufnahmeelemente 31d, 32d eine Orientierung des Blendenelements 33 relativ zur entsprechenden ersten Lagerhälfte 31 oder zweiten Lagerhälfte 32 festgelegt ist.

In der Ausführungsform nach Fig. 1 weist die erste Lagerhälfte 31 die Aufnahmeelemente 31d auf. Das korrespondierende andere Lagerelement, im Fall der Fig. 7 also das zweite Lagerelement 32, kann eine mit den Aufnahmeelementen 31d des ersten Lagerelements 31 korrespondierende Aussparung aufweisen, um mit den Aufnahmeelementen 31d vorteilhaft in Eingriff bringbar zu sein.

Es ist ferner bevorzugt und in allen Ausführungsformen möglich sowie konkret in Fig. 2 dargestellt, dass eine der Lagerhälften 31, 32 oder beide Lagerhälften 31, 32 eine erste Lageraufnahme 31f bzw. eine zweite Lageraufnahme 32f aufweisen können, um mit der Aufnahme 15 des ersten Gehäuseteils 10 oder mit dem ersten Aufnahmepin 15 bzw. mit der Aufnahme 25 des zweiten Gehäuseteils 20 oder mit dem zweiten Aufnahmepin 25 verbindbar zu sein.

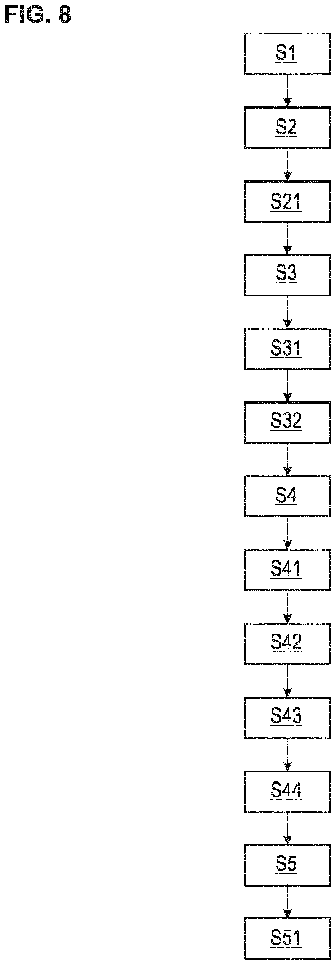

In Fig. 8 ist ein Ausführungsbeispiel eines erfindungsgemäßen Verfahrens 200 zur Herstellung eines vorbeschriebenen Strömungswiderstandsrohres 100 dargestellt.

Das Verfahren 200 umfasst zumindest die Schritte: S1 Bereitstellen der ersten Lagerhälfte 31 und der zweiten Lagerhälfte 32, S2 Anordnen des Blendenelements 33 innerhalb der ersten Lagerhälfte 31, S3 Verpressen der ersten Lagerhälfte 31 und der zweiten Lagerhälfte 32 zur kraftschlüssigen Aufnahme des Blendenelements 33, S4 Bereitstellen des ersten Gehäuseteils 10 und des zweiten Gehäuseteils 20, Verbinden von dem ersten Gehäuseteil 10, dem zweiten Gehäuseteil 20 und dem Lagerelement 30, um das Strömungswiderstandsrohr 100 zu erhalten.

Es ist bevorzugt und in Fig. 8 dargestellt, dass das Verfahren 200 optional den folgenden Schritt umfassen kann: S31 Abdichtendes Verbinden der ersten Lagerhälfte 31 und der zweite Lagerhälfte 32 unter Verwendung eines Dichtmittels 60. Schritt S31 kann beispielsweise durchgeführt werden, indem während des Verpressens in Schritt S3 die erste Lagerhälfte 31 und die zweite Lagerhälfte 32 stoffschlüssig verbunden und somit abgedichtet werden, beispielsweise durch Laserschweißen.

Es ist ferner bevorzugt und in Fig. 8 dargestellt, dass das Verfahren 200 optional einen oder mehrere der folgenden Schritte umfassen kann: S32 Fügen der erste Lagerhälfte 31 und der zweite Lagerhälfte 32und/oder S41 abdichtendes Verbinden der ersten Lagerhälfte 31 und des erste Gehäuseteils 10 mittels dem ersten Dichtelement 40, 42 und/oder S42 abdichtendes Verbinden der zweiten Lagerhälfte 32 und des zweiten Gehäuseteils 20 mittels dem zweiten Dichtelement 50, 52 und/oder S51 formschlüssiges Verbinden des Kopplungselements 31 mit der entsprechenden Kopplungsaufnahme 16 des ersten Gehäuseteils 10 oder des zweiten Gehäuseteils 20.

Falls das Dichtmittel 60 eine stoffschlüssige Verbindung ist, sind Schritt S31 und Schritt S32 identisch.

Für den in Fig. 6 und 7 dargestellten und in allen Ausführungsformen möglichen Fall, dass die erste Lagerhälfte 31 oder die zweite Lagerhälfte 32 zwei Aufnahmeelemente 31d, 32d zur Aufnahme des Blendenelements 33 aufweist, kann das Verfahren 200 ferner den Schritt: S21 Aufnahme des Blendenelements 33 durch die Aufnahmeelemente 31d, 32d aufweisen.

Für den in Fig. 2 dargestellten und in allen Ausführungsformen möglichen Fall, dass das erste Dichtelement 40, 42 und/oder das zweite Dichtelement 50, 52 vorgesehen sind, kann das Verfahren 200 ferner den oder die folgenden Schritte umfassen: S43 Einsetzen der ersten Trägerstruktur 40 in eine korrespondierende Aufnahme 14, 15 des ersten Gehäuseteils 10 und/oder S44 Einsetzen der zweiten Trägerstruktur 50 in eine korrespondierende Aufnahme 24, 25 des zweiten Gehäuseteils 20.

Alle hierin beschriebenen Merkmale sind, soweit dies nicht alternativen betrifft oder widersprüchlich ist, miteinander kombinierbar.

### Bezugszeichenliste

- 10: erster Gehäuseteil
- 11: erster Flanschabschnitt
- 12: erste Gehäusewandung
- 13: erste Druckmessöffnung
- 14: Aufnahme, erste Aufnahmenut
- 15: Aufnahme, erster Aufnahmepin
- 16: Kopplungsaufnahme
- 20: zweiter Gehäuseteil
- 21: zweiter Flanschabschnitt
- 22: zweite Gehäusewandung
- 23: zweite Druckmessöffnung
- 24: Aufnahme, zweite Aufnahmenut
- 25: Aufnahme, zweiter Aufnahmepin
- 30: Lagerelement
- 31: erste Lagerhälfte
- 31a: erste Lagerwandung
- 31b: erster Lagerboden
- 31c: erste Lageröffnung
- 31d: Aufnahmeelement
- 31e: Kopplungselement
- 31f: erste Lageraufnahme
- 32: zweite Lagerhälfte
- 32a: zweite Lagerwandung
- 32b: zweiter Lagerboden
- 32c: zweite Lageröffnung
- 32d: Aufnahmeelement
- 32f: zweite Lageraufnahme
- 33: Blendenelement
- 33a: Schlitz
- 33b: Blendenabschnitt
- 33c: äußerer Halteabschnitt
- 33d: Gelenkabschnitt
- 33e: Aufnahmeöffnung
- 40: erstes Dichtelement
- 41: erste Trägerstruktur
- 42: Dichtung
- 43: Trägeraufnahme
- 50: zweites Dichtelement
- 51: zweite Trägerstruktur
- 52: Dichtung
- 60: Dichtmittel
- 70: weiteres Dichtmittel
- 100: Strömungswiderstandsrohr
- 101: Strömungskanal
- 200: Verfahren
- S1, S2, ...: Verfahrensschritte
- S: Spalt
- X: Strömungskanalachse

## Patentansprüche

1. Strömungswiderstandsrohr (100) für einen Durchflusssensor, aufweisend:
einen ersten Gehäuseteil (10) und einen zweiten Gehäuseteil (20) und
ein zwischen dem ersten Gehäuseteil (10) und dem zweiten Gehäuseteil (20) angeordnetes Lagerelement (30),
wobei das Lagerelement (30) eine erste Lagerhälfte (31), eine zweite Lagerhälfte (32) und ein Blendenelement (33) umfasst,
wobei das Blendenelement (33) zwischen der ersten Lagerhälfte (31) und der zweiten Lagerhälfte (32) kraftschlüssig aufgenommen ist, so dass das Blendenelement (33) gegenüber der ersten Lagerhälfte (31) und der zweiten Lagerhälfte (32) schwenkbar ist, und
wobei die erste Lagerhälfte (31) und die zweite Lagerhälfte (32) durch ein Dichtmittel (60) abdichtend verbunden sind, und
wobei zwischen dem Blendenelement (33) und jeder der ersten Lagerhälfte (31) und der zweiten Lagerhälfte (32) kein Dichtelement angeordnet ist.

2. Strömungswiderstandsrohr (100) nach Anspruch 1,
wobei die erste Lagerhälfte (31) das Blendenelement (33) in einer Blendenelement-Ebene vollständig umschließt, und
wobei die zweite Lagerhälfte (32) das Blendenelement (33) in der Blendenelement-Ebene vollständig umschließt.

3. Strömungswiderstandsrohr (100) nach einem der vorherigen Ansprüche,
wobei die erste Lagerhälfte (31) und der erste Gehäuseteil (10) durch ein erstes Dichtelement (40, 42) abdichtend verbunden sind, und/oder
wobei die zweite Lagerhälfte (32) und der zweite Gehäuseteil (20) durch ein zweites Dichtelement (50, 52) abdichtend verbunden sind.

4. Strömungswiderstandsrohr (100) nach Anspruch 3,
wobei das erste Dichtelement (40, 42) als Teil einer ersten Trägerstruktur (41) ausgebildet ist,
wobei die erste Trägerstruktur (41) in eine korrespondierende Aufnahme (14, 15) des ersten Gehäuseteils (10) eingesetzt ist, und/oder
wobei das zweite Dichtelement (50, 52) als Teil einer zweiten Trägerstruktur (51) ausgebildet ist,
wobei die zweite Trägerstruktur (51) in eine korrespondierende Aufnahme (24, 25) des zweiten Gehäuseteils (20) eingesetzt ist.

5. Strömungswiderstandsrohr (100) nach Anspruch 3 oder 4,
wobei das erste Dichtelement (40, 42) und das zweite Dichtelement (50, 52) sowie, im Fall des Anspruchs 5, die erste Trägerstruktur (41) und die zweite Trägerstruktur (51) identisch ausgebildet sind.

6. Strömungswiderstandsrohr (100) nach einem der vorherigen Ansprüche,
wobei das Lagerelement (30) ein Kopplungselement (31e) aufweist, welches mit einer entsprechenden Kopplungsaufnahme (16) des ersten Gehäuseteils (10) oder des zweiten Gehäuseteils (20) verbindbar ist,
wobei das Kopplungselement (16) vorzugsweise nicht mit dem entsprechenden anderen zweiten Gehäuseteil (20) oder ersten Gehäuseteil (10) verbindbar ist.

7. Strömungswiderstandsrohr (100) nach einem der vorherigen Ansprüche,
wobei die erste Lagerhälfte (31) oder die zweite Lagerhälfte (32) zwei Aufnahmeelemente (31d, 32d) zur Aufnahme des Blendenelements (33) aufweist,
wobei durch die Aufnahmeelemente (31d, 32d) eine Orientierung des Blendenelements (33) relativ zur entsprechenden ersten Lagerhälfte (31) oder zweiten Lagerhälfte (32) festgelegt ist.

8. Durchflusssensor, aufweisend ein Strömungswiderstandsrohr (100) nach einem der vorherigen Ansprüche.

9. Verfahren (200) zur Herstellung eines Strömungswiderstandsrohr (100) nach einem der Ansprüche 1 bis 7, umfassend die Schritte:
(S1) Bereitstellen der ersten Lagerhälfte (31) und der zweiten Lagerhälfte (32),
(S2) Anordnen des Blendenelements (33) innerhalb der ersten Lagerhälfte (31),
(S3) Verpressen der ersten Lagerhälfte (31) und der zweiten Lagerhälfte (32) zur kraftschlüssigen Aufnahme des Blendenelements (33),
(S31) Abdichtendes Verbinden der ersten Lagerhälfte (31) und der zweiten Lagerhälfte (32) unter Verwendung eines Dichtmittels (60),
(S4) Bereitstellen des ersten Gehäuseteils (31) und des zweiten Gehäuseteils,
(S5) Verbinden von dem ersten Gehäuseteil (10), dem zweiten Gehäuseteil (20) und dem Lagerelement (30), um das Strömungswiderstandsrohr (100) zu erhalten.
